# FASCICULE DE BREVET EUROPEEN

(11) **EP 3 650 299 B1**
(45) Date de publication et mention de la délivrance du brevet: **17.02.2021**
(21) Numéro de dépôt: 18205793.5
(22) Date de dépôt: 12.11.2018
(51) Int. Cl.: B61B 1/02, B61B 12/00

(54) **DISPOSITIF DE REGULATION DE L'EMBARQUEMENT DANS UNE INSTALLATION DE TRANSPORT PAR CABLE**
REGULIERVORRICHTUNG DER BELADUNG EINER LUFTSEILFÖRDERANLAGE
DEVICE FOR CONTROLLING LOADING IN A CABLE TRANSPORT FACILITY

(43) Date de publication de la demande: 13.05.2020
(73) Titulaire: Eiffage Metal, 78140 Velizy-Villacoublay (FR); POMA, 38340 Voreppe (FR)
(72) Inventeur: GAVOTY, Simon, 75009 Paris (FR); COUDURIER, Stéphane, 38960 Saint-Étienne-de-Crossey (FR); MENEGUZ, Adrien, 38360 Sassenage (FR)
(74) Mandataire: Cabinet Netter

(56) Documents cités:
- EP-A1- 3 009 993
- FR-A1- 2 953 476
- JP-A- H0 558 276
- JP-A- H06 234 363
- JP-A- 2009 122 863
- US-A- 5 176 082
- US-A1- 2015 278 618

## Description

L'invention a trait à un dispositif de commande d'une installation de transport par câble, en particulier en milieu urbain ou périurbain.

Une telle installation comprend généralement deux stations d'extrémité, entre lesquelles sont tendus un ou plusieurs câbles qui assurent au moins la traction de véhicules passagers. Des stations supplémentaires peuvent être intercalées entre ces stations d'extrémité, le long du trajet des câbles. C'est très souvent le cas en milieu urbain ou périurbain.

Il est important de pouvoir réguler les flux de passagers qui embarquent dans les véhicules et en débarquent. Il s'agit non seulement de garantir que l'installation fonctionne conformément à son dimensionnement, mais aussi de l'exploiter efficacement. En outre, il convient de veiller au confort des passagers. Enfin, on se doit de respecter une charge maximale en chaque véhicule.

Une particularité des installations de transport par câble du type mentionné en introduction réside en ce que le déplacement de l'ensemble des véhicules se fait suivant un trajet en boucle ou en va-et-vient, au moins entre les stations d'extrémité. Il convient de respecter une certaine répartition des véhicules sur la ligne, ou une cadence d'un point de vue temporel, en particulier pour éviter des collisions entre véhicules. Pour respecter cette cadence, l'embarquement et le débarquement en station se font généralement selon une période temporelle imposée. Autrement dit, tout véhicule de la ligne dispose d'un même intervalle de temps en station pendant lequel le véhicule peut embarquer et débarquer des passagers.

L'installation est généralement équipée d'un dispositif de commande comprenant au moins un contrôleur capable d'organiser une période d'embarquement pour des véhicules en station. Cette période d'embarquement se finit par une interdiction d'accès au véhicule.

Dans des installations assez simples, en montagne notamment, une station est équipée d'un quai, dont un tronçon au moins est aménagé pour le débarquement et l'embarquement de passagers. À l'approche de ce tronçon, les portes du véhicule s'ouvrent, classiquement par action mécanique d'une came, ce qui marque le début de la période d'embarquement/débarquement. En s'éloignant de ce tronçon, les portes du véhicule se ferment, également par action mécanique d'une came, ce qui marque la fin de la période d'embarquement/débarquement. L'embarquement et le débarquement se font tandis que le véhicule se déplace, à vitesse réduite, le long du tronçon de quai. La période d'embarquement/débarquement correspond au temps mis par le véhicule pour parcourir la portion de quai.

Dans d'autres installations, la période d'embarquement et de débarquement peut comprendre un arrêt du véhicule en station, et une ouverture puis une fermeture de portes. Le cas échéant, des signaux d'avertissement sonores et/ou lumineux peuvent être émis dans cette période.

Classiquement, une régulation des flux de passagers est assurée, dans les installations de transport par câble, par des agents d'exploitation. Le rôle de ces derniers consiste essentiellement à interdire l'accès à un véhicule lorsque celui-ci est plein, ou à inciter les usagers à embarquer afin de remplir un véhicule. Le plus souvent, les agents d'exploitation agissent sur la base d'un contrôle visuel sommaire.

Cette manière de réguler les flux de passagers est incompatible avec des véhicules de grande capacité ou lorsque le débit de passagers augmente. Dans ces deux cas en effet, les agents sont généralement incapables d'estimer l'occupation d'un véhicule de manière suffisamment précise pour réguler efficacement le flux de passagers. La tâche de ces agents est rendue plus complexe encore en station intermédiaire : là, les agents doivent dénombrer les passagers qui débarquent, ou ceux qui restent dans le véhicule, pour réguler le flux de passagers à embarquer.

Surtout, ce type de régulation nécessite un nombre d'agents d'autant plus important que les durées d'exploitation sont longues, ou les véhicules et/ou les stations nombreux. Dans certains cas, ce type de régulation est trop coûteux pour être envisagé, en particulier lorsque l'installation se trouve en milieu urbain ou péri-urbain.

Pour pallier cette difficulté, il est connu, de EP 3 009 993 notamment, d'organiser un quai d'embarquement en un ou plusieurs sas, chaque sas donnant accès à un véhicule respectif. L'accès des passagers aux sas est contrôlé, par un tourniquet par exemple, de telle sorte que la capacité de chaque sas puisse être adaptée à celle du véhicule. Ces sas permettent de dénombrer précisément les passagers qui vont embarquer dans un véhicule, avant que ces derniers n'accèdent au véhicule en question.

Une telle installation se révèle efficace surtout dans le cas où les véhicules parviennent vides au quai d'embarquement. Une telle installation peut difficilement être prévue en une station intermédiaire. En outre, les sas en question occupent un espace important sur le quai. Enfin, ces sas sont généralement mal perçus par les passagers, en ce qu'ils contribuent à produire chez eux un sentiment d'inconfort.

On connaît également de FR 2 953 476 une installation de transport par câble aérien, dans laquelle les passagers indiquent, à l'entrée de chaque station, leur destination par l'intermédiaire d'un dispositif d'enregistrement obligatoire. Un programmateur centralise ces indications sur l'ensemble de l'installation et en déduit, pour chaque véhicule arrivant en station, un nombre de places disponibles à l'embarquement. Un sas d'accès est aménagé sur chaque quai d'embarquement, auquel ne peut accéder qu'un nombre de passagers correspondant aux places disponibles.

Cette installation est très sensible aux éventuelles erreurs dans la saisie des destinations. L'installation ne comporte aucun dispositif de redondance permettant de corriger d'éventuels écarts au réel. En outre, la déduction du nombre de places disponibles ne tient pas compte du volume réellement occupé par les passagers dans le véhicule, ni du poids global de ces passagers.

L'invention s'est fixée pour objectif d'améliorer la situation.

On propose un dispositif de commande d'une installation de transport par câble comprenant au moins un contrôleur capable d'organiser une période d'embarquement d'une durée nominale pour des véhicules en station, cette période d'embarquement se finissant par une interdiction d'accès au véhicule. Le contrôleur comprend une entrée pour recevoir au moins une grandeur représentative d'une occupation véhicule. Le contrôleur est agencé pour réagir à la réception d'une telle grandeur pendant la période d'embarquement en la comparant à une valeur seuil et en déclenchant l'interdiction d'accès au véhicule de manière anticipée, avant la fin de la période d'embarquement, en fonction du résultat de la comparaison entre ladite grandeur et la valeur seuil.

Le dispositif proposé permet de réguler de manière simple et efficace des flux de passagers à embarquer/débarquer dans des véhicules de l'installation, sans modification du quai d'embarquement, et d'une manière qui augmente le confort des passagers.

En fonction du résultat de la comparaison entre la grandeur représentative de l'occupation véhicule et la valeur seuil, par exemple lorsque cette grandeur comprend une valeur d'occupation supérieure à la valeur seuil, une interdiction d'accès peut être déclenchée de manière anticipée, pendant la période d'embarquement. Il en résulte une interruption de l'embarquement des passagers, avant la fin de la période d'embarquement. Le nombre de passagers dans le véhicule se trouve régulé. Tant que la valeur d'occupation en question reste inférieure à la valeur seuil, des passagers peuvent embarquer, jusqu'à la fin de la période d'embarquement. La période d'embarquement est déterminée par le cadencement des véhicules sur la ligne. La période d'embarquement peut respecter une temporisation nominale, résultant du cadencement des véhicules sur la ligne, tout en interdisant de manière anticipée l'accès au véhicule.

De préférence, la période d'embarquement se fait selon une première temporisation et, lorsque le contrôleur déclenche une interdiction d'accès en avance sur la première temporisation, l'automate organise un délai de temporisation d'une durée déterminée à l'issue de cette interdiction d'accès, la durée du délai de temporisation étant déterminée en fonction de cette avance. Le cas échéant, on peut prévoir que la durée du délai de temporisation corresponde à ladite avance de laquelle est déduit, le cas échéant, un retard dans l'exécution de la séquence d'interdiction d'accès.

En pratique, on fait en sorte qu'à l'issue du délai de temporisation, l'automate vérifie qu'une condition de départ est remplie, et, de préférence, génère un ordre de départ.

La valeur seuil peut être inférieure à une valeur maximale de capacité du véhicule, de manière à veiller au confort des passagers.

L'interdiction d'accès au véhicule, lorsqu'elle est déclenchée de façon anticipée, peut être semblable à une interdiction déclenchée en fin de période d'embarquement.

Les passagers ne perçoivent alors aucune anticipation, évitant ainsi toute préoccupation liée à une éventuelle surcharge du véhicule, ainsi que les désagréments liés à un comptage physique ou à des aménagements spécifiques du quai.

On propose en outre une installation de transport par câble du type comprenant des véhicules et au moins une station, l'installation comprenant en outre un dispositif de commande tel que précédemment décrit.

On propose en outre un procédé de commande d'une installation de transport par câble, dans lequel on organise une période d'embarquement d'une durée nominale pour des véhicules en station, cette période d'embarquement finissant avec une interdiction d'accès au véhicule. Le procédé comprend les étapes suivantes :
- recevoir au moins une grandeur représentative d'une occupation véhicule ;
- réagir à la réception d'une telle grandeur pendant la période d'embarquement en la comparant à une valeur seuil et en déclenchant l'interdiction d'accès au véhicule de manière anticipée, avant la fin de la période d'embarquement, en fonction du résultat de la comparaison entre ladite grandeur et la valeur seuil.

D'autres caractéristiques et avantages de l'invention apparaîtront à l'examen de la description détaillée ci-après, et des dessins annexés sur lesquels :
- la figure 1 est un schéma qui représente une portion d'une installation de transport par câble ;
- la figure 2 est un diagramme fonctionnel d'un automatisme de véhicule à usage par exemple dans l'installation de la figure 1 ;
- la figure 3 est un diagramme fonctionnel d'un automatisme de station à usage par exemple dans l'installation de la figure 1 ;
- la figure 4 est un ordinogramme qui représente le fonctionnement d'un dispositif de commande à usage par exemple dans l'installation de la figure 1 ;
- la figure 5 est un ordinogramme qui détaille l'étape 411 de la figure 4, selon un premier mode de réalisation ;
- la figure 6 est un ordinogramme qui détaille l'étape 411 de la figure 4, selon un second mode de réalisation ;
- la figure 7 est un ordinogramme qui détaille l'étape 411 de la figure 4, selon un troisième mode de réalisation ;
- la figure 8 est un ordinogramme qui illustre un développement de l'étape 411 ;
- la figure 9 est un ordinogramme qui illustre un autre développement de l'étape 411 ;
- la figure 10 est un ordinogramme qui illustre une variante du développement de la figure 9;
- la figure 11 est un ordinogramme qui représente une variante du fonctionnement de la figure 4.

Les dessins annexés contiennent des éléments de caractère certain. Ils pourront non seulement servir à compléter l'invention, mais aussi contribuer à sa définition, le cas échéant.

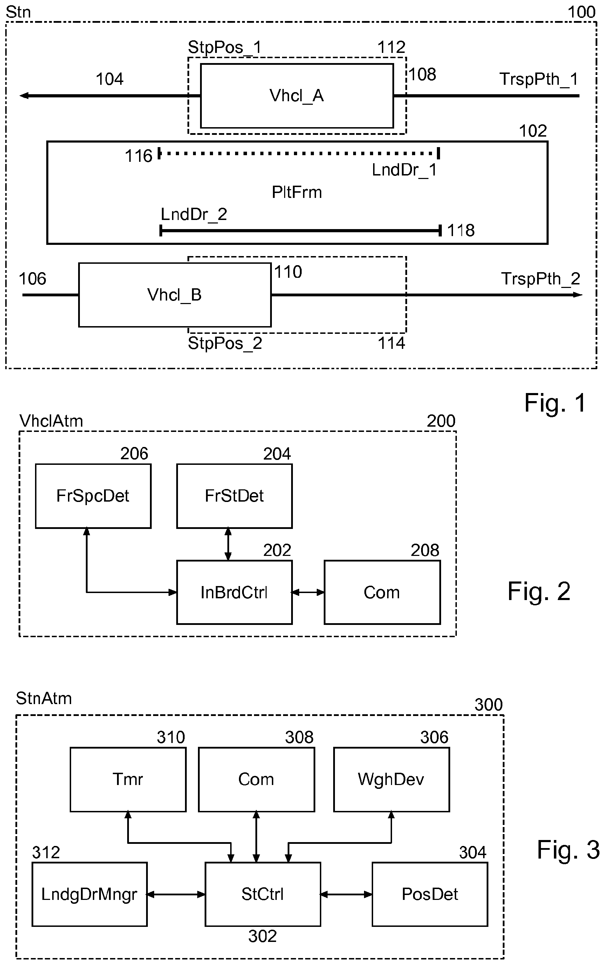

On fait référence à la figure 1.

Elle montre une installation d'un système de transport par câble, de type télécabine, funiculaire ou analogue, sous la forme d'une portion de station 100.

La station 100 comprend un quai allongé 102 qui s'étend le long d'une partie d'une première voie de transport 104 et d'une seconde voie de transport 106 du système, entre celles-ci. Le système comprend des véhicules adaptés au transport de passagers, ici un premier véhicule 108 et un second véhicule 110. Ces véhicules sont susceptibles de traverser la station 100 en empruntant la première voie 104, comme le premier véhicule 108, ou la seconde voie 106, comme le second véhicule 110.

Sur la première voie 104 et la seconde voie 106, la circulation des véhicules est organisée selon des sens mutuellement opposés. Le premier véhicule 108 circule de la droite vers la gauche de la figure 1, tandis que le second véhicule 110 circule de la gauche vers la droite de cette figure.

Dans la station 100, un ou plusieurs tronçons du quai allongé 102 sont aménagés en postes à quai, pour l'embarquement et/ou le débarquement de passagers dans les véhicules. Chaque poste à quai correspond à une zone d'embarquement dans un ou plusieurs véhicules, et/ou de débarquement de ceux-ci. Ici, chaque poste à quai correspond à une position d'arrêt de véhicule dans la station 100.

Dans l'exemple montré ici, un premier poste à quai, correspondant à une première position d'arrêt 112, est organisé pour la première voie 104, tandis qu'un second poste à quai, correspondant à une seconde position d'arrêt 114, est organisé pour la seconde voie 106. Le premier véhicule 108 est montré ici en la première position d'arrêt 112, tandis que le second véhicule 110 approche de la seconde position d'arrêt 114.

Chaque poste à quai comprend ici un agencement à porte palière, constitué d'un ou plusieurs éléments de porte et installé sur le quai 102 en regard d'une position d'arrêt respective. Dans l'exemple de la figure 1, un premier agencement à porte palière 116 se trouve en regard de la première position d'arrêt 112, tandis qu'un second agencement à porte palière 118 se trouve en face de la seconde position d'arrêt 114.

Chaque agencement à porte palière peut être commandé de manière à basculer entre un premier état, ou état ouvert, où l'agencement autorise l'accès de passagers, depuis le quai 102, à un véhicule arrêté en une position d'arrêt respective, et un second état, ou état fermé, où cet agencement interdit un tel accès.

Dans l'exemple montré ici, le premier agencement à porte palière 116 est représenté dans son état ouvert (ligne en pointillé), tandis que le second agencement à porte palière 118 est représenté dans son état fermé (ligne en trait plein).

On fait référence à la figure 2.

Elle montre un exemple d'automatisme de contrôle à usage dans des véhicules d'une installation de transport par câble, par exemple le premier véhicule 108 et le second véhicule 110 de la figure 1.

L'automatisme véhicule 200 comprend un contrôleur de bord 202. L'automatisme véhicule 200 comprend ici en outre un module de détection de sièges inoccupés, ou module FrStDet 204, relié au contrôleur de bord 202 et capable de délivrer à ce dernier une valeur représentative d'un nombre de sièges libres dans la cabine du véhicule. La cabine correspond au sous-ensemble du véhicule dans lequel se trouvent physiquement les passagers. La cabine peut être organisée en places assises et/ou places debout. Une ou plusieurs entrées du module FrStDet 204 peuvent être reliées à la sortie d'un ou plusieurs dispositifs du groupe formé de dispositifs de pesée installés dans les sièges, de contacts secs disposés dans les sièges, d'un détecteur optique, d'un dispositif de prise de vues associé à un circuit de traitement d'images et similaires.

L'automatisme véhicule 200 comprend ici encore un module de détection de surface libre, ou module FrSpcDet 206, relié au contrôleur de bord 202 et capable de délivrer à ce dernier une valeur représentative d'une surface inoccupée dans la cabine. Une ou plusieurs entrées du module FrSpcDet 206 peuvent être reliées à la sortie d'un ou plusieurs dispositifs du groupe formé d'un agencement de réflecteurs optiques répartis sur le sol de la cabine et de détecteurs optiques répartis au plafond de cette cabine, d'un dispositif de prise de vues associé à un circuit de traitement d'images, d'un tapis de sol à contacteurs répartis, d'un tapis du type capacitif et similaires.

Ici, l'automatisme véhicule 200 comprend encore un module de communication 208, relié au contrôleur de bord 202, par l'intermédiaire duquel l'automatisme véhicule 200 peut communiquer avec d'autres automatismes, en particulier de station.

On fait référence à la figure 3.

Elle montre un exemple d'automatisme de contrôle à usage pour une station d'une installation de transport par câble, telle que la station 100 de la figure 1 par exemple.

L'automatisme de station 300 comprend un contrôleur de station 302. L'automatisme de station 300 comprend en outre un module de positionnement 304 pour les véhicules de la station. En particulier, le module de positionnement 304 est capable de déterminer la présence d'un véhicule en certaines au moins de zones d'embarquement et/ou de débarquement de la station, le cas échéant aux positions d'arrêt de la station. Par exemple, Le module de positionnement 304 est capable de déterminer la présence d'un véhicule dans l'une au moins de la première position d'arrêt 112 et la seconde position d'arrêt 114 de la figure 1. Le module de positionnement 304 est par exemple relié à un ou plusieurs capteurs installés en une position d'arrêt respective.

L'automatisme de station 300 comprend encore un module de charge 306 pour les véhicules de la station. Le module de charge 306 est capable de déterminer une valeur de poids pour certains au moins des véhicules de la station, en particulier lorsque ceux-ci se trouvent en une position d'arrêt respective, comme le premier véhicule 108 de la figure 1 par exemple. Cette valeur de poids est de préférence obtenue par mesure. Le module de charge 306 est par exemple relié à un ou plusieurs dispositifs de type pesons installés sur ce qui guide les véhicules le long d'une voie en station, par exemple des rails.

L'automatisme de station 300 comprend également un module de communication 308, relié au contrôleur de station 302, qui permet à l'automatisme de station 300 de communiquer avec d'autres automatismes, typiquement des automatismes véhicules, tels que celui décrit en relation avec la figure 2 par exemple.

L'automatisme de station 300 comprend aussi un module minuteur 310 relié au contrôleur de station 302. Le module minuteur 310 est capable de délivrer au contrôleur de station 302 des valeurs de mesure temporelle.

L'automatisme de station 300 comprend enfin un module de gestion 312 pour des agencements interdisant sélectivement l'embarquement depuis un poste à quai, en particulier l'accès de passagers à un véhicule arrêté en une position d'arrêt respective, typiquement des agencements du type du premier agencement à porte palière 116 décrit en relation avec la figure 1. Le module de gestion 312 commande en particulier l'ouverture et la fermeture des agencements en question. En complément ou en remplacement, le module de gestion 312 peut être configuré de manière à commander en outre l'ouverture et/ou la fermeture des portes d'un véhicule, au moins lorsque ce véhicule se trouve en regard d'un poste à quai, notamment en une position d'arrêt respective. Cette commande peut être directe, à l'adresse d'un dispositif d'ouverture en station, ou indirecte, typiquement par l'intermédiaire de l'automatisme véhicule.

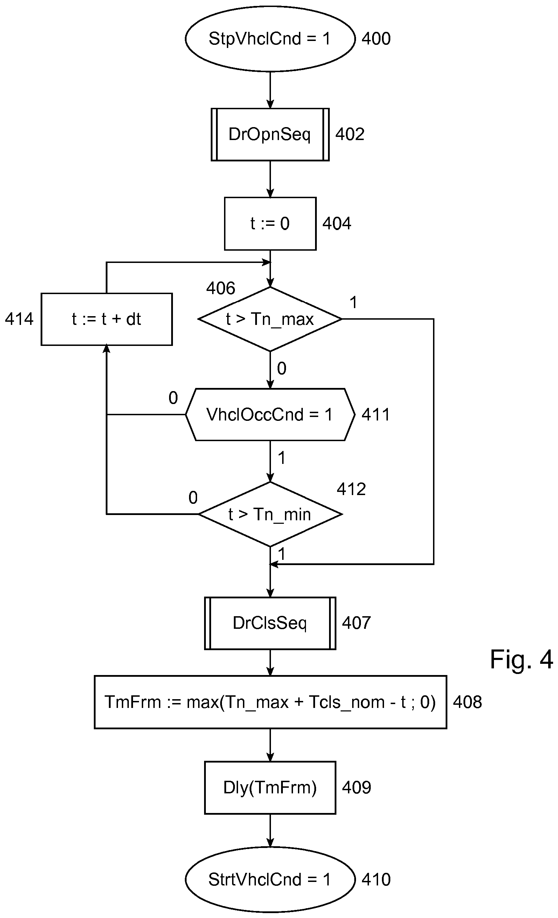

On fait référence à la figure 4.

Elle montre un fonctionnement d'un automate de station, tel que l'automatisme station 300 de la figure 3, dans une séquence correspondant à un arrêt d'un véhicule en un poste à quai de la station, en vue d'embarquer/débarquer des passagers.

La séquence débute par une étape 400 où une condition d'arrêt d'un véhicule au poste à quai, ou condition StpVhclCnd, est vérifiée. Par exemple, la condition peut concerner l'arrêt du premier véhicule 108 de la figure 1 au premier poste à quai. La vérification de cette condition StpVhclCnd implique en particulier la vérification d'une double condition, à savoir :
- la présence d'un véhicule en la position d'arrêt correspondant au poste à quai, obtenue par exemple d'un module du type du module de positionnement 304 de la figure 3, et
- l'immobilité de ce véhicule par rapport au quai, laquelle peut être déduite d'une mesure de vitesse du véhicule, obtenue par exemple d'un automate embarqué dans ce véhicule.

La condition StpVhclCnd peut être vérifiée, au moins partiellement, par un automate embarqué dans le véhicule, par exemple l'automatisme véhicule 200 de la figure 2. L'information relative à cette vérification peut être transmise à l'automate de station.

À l'étape suivante 402, l'automate commande une sous-séquence destinée à autoriser l'accès au véhicule aux usagers présents sur le quai, ou embarquement, et, réciproquement, l'accès au quai aux passagers de la cabine, ou débarquement. Il s'agit typiquement d'une séquence d'ouverture de portes, ou séquence DrOpnSeq. Cette séquence DrOpnSeq comprend une commande d'ouverture des dispositifs interdisant l'accès au véhicule depuis le quai, en particulier de portes palières, par exemple du premier agencement à porte palière 116 sur la figure 1. Cette séquence DrOpnSeq peut comprendre en outre une commande d'ouverture de portes véhicule, directement à un dispositif d'ouverture en station ou, indirectement, à l'automatisme véhicule.

Une fois la séquence DrOpnSeq terminée, l'automate débute une mesure de période temporelle, par exemple en commandant un dispositif analogue au minuteur 310 de la figure 3. Le début de cette mesure est illustré ici par l'initialisation d'une variable t formant compteur de temps à la valeur 0 ("zéro"), à l'étape 404. Ceci correspond au commencement d'une période d'embarquement/débarquement.

À l'étape suivante 406, on vérifie si la période temporelle écoulée depuis le début de la mesure à l'étape 404 est supérieure, ou égale, à un premier paramètre temporel Tn_max. En pratique, le minuteur 310 peut fournir en temps réel à l'automate le temps écoulé depuis que ce minuteur 310 a reçu la commande de mesure. Cette condition est illustrée ici par le fait que le compteur de temps t est supérieur, ou égal, au premier paramètre temporel Tn_max.

Si oui, alors, dans une étape 407, l'automate commande une séquence destinée à interdire l'embarquement/débarquement. C'est la fin de la période d'embarquement/débarquement.

Il s'agit typiquement d'une séquence de fermeture de portes, ou séquence DrClsSeq. Cette séquence de fermeture DrClsSeq comprend généralement une commande d'émission d'annonce sonore et/ou visuelle, ainsi qu'une commande subséquente de fermeture de portes palières. En complément ou en remplacement, cette séquence DrClsSeq peut comprendre en outre une commande de fermeture de portes véhicule, directement à un dispositif de fermeture en station ou, indirectement, à l'automate véhicule. Cette séquence présente une durée nominale, ou durée Tcls_nom, qui est un autre paramètre temporel de l'installation.

Ensuite, l'automate mémorise, ici dans une variable TmFrm, une valeur correspondant au maximum de :
- la différence entre, d'une part, la somme du premier paramètre temporel Tn_max et de la durée nominale Tclos_nom de la séquence de fermeture des portes, et, d'autre part, la valeur du compteur de temps t ;
- la valeur nulle.

Quand l'étape 407 suit le test 406, la valeur de la variable TmFrm calculée à l'étape 408 est nulle.

Cette séquence de l'étape 408 terminée, l'automate met en œuvre une temporisation dont la durée correspond à la valeur de la variable TmFrm mémorisée à l'étape408, ce qui correspond à l'étape 409. Dans le cas où l'étape 407 suit l'étape 406, cette temporisation est nulle. C'est le cas lorsque la durée écoulée à l'étape 406 est supérieure, ou égale, au premier paramètre temporel Tn_max.

La temporisation de l'étape 409 terminée, la séquence d'arrêt du véhicule peut s'achever. Le véhicule est prêt à redémarrer, du moins pour ce qui concerne la partie de l'automate station qui pilote le poste à quai. Ceci correspond à la vérification d'une condition de départ, ou condition StrtVhclCnd. Un ordre de départ est par exemple transmis de l'automate station à l'automate véhicule.

On reconnaît dans la succession du test de l'étape 406 et de la séquence de l'étape 407 une temporisation correspondant au premier paramètre temporel Tn_max. À l'expiration d'une période de temporisation de durée Tn_max depuis la fin de la séquence d'ouverture de l'étape 402, l'automate commande la séquence de fermeture des portes de l'étape 407. Et le véhicule est prêt à partir immédiatement après cette fermeture, du fait que la durée de la temporisation supplémentaire prévue à l'étape 409 est nulle dans le cas présent. Cette période de temporisation de durée Tn_max correspond à une période d'embarquement/débarquement pour les véhicules en station selon une temporisation nominale.

Si le test de l'étape 406 est négatif, c'est-à-dire dans le cas où le temps écoulé depuis la fin de la séquence d'ouverture de l'étape 402 est inférieur à la valeur du premier paramètre temporel Tn_max, alors l'automate vérifie une condition portant sur une grandeur représentative d'une occupation du véhicule, ou condition VhclOccCnd. La grandeur est relative à une mesure réalisée sur le véhicule. Par exemple, cette condition porte sur une comparaison d'une mesure d'occupation à une valeur seuil.

Si cette condition VhclOccCnd est vérifiée, alors l'automate vérifie que la période temporelle écoulée depuis la fin de la séquence d'ouverture de l'étape 402 est supérieure à un second paramètre temporel Tn_min. La valeur de ce second paramètre temporel Tn_min est inférieure à la valeur du premier paramètre temporel Tn_max. Ceci est représenté par l'étape 412, dans laquelle on vérifie si le compteur de temps t est supérieur à la valeur du second paramètre temporel Tn_min.

Si oui, alors l'automate passe à l'étape 407, où il commande la fin de la période d'embarquement/débarquement, puis à l'étape suivante 408. Là, la valeur mémorisée dans la variable TmFrm correspond à la différence entre le second paramètre temporel Tn_max et la durée écoulée depuis la fin de la séquence d'ouverture de l'étape 402. Cette valeur TmFrm correspond alors à une avance temporelle par rapport à une période de temporisation dont la durée correspond au premier paramètre temporel Tn_max, avance de laquelle est déduite, le cas échéant, un retard dans la séquence DrClsSeq par rapport à la durée nominale Tcls_nom de cettte séquence. À l'étape 407, l'automate déclenche une interdiction d'accès au véhicule, de manière anticipée par rapport au premier paramètre temporel Tn_max. Ce déclenchement anticipé résulte de l'évaluation de la condition VhclOccCnd portant sur une grandeur représentative de l'occupation du véhicule. À la suite de l'étape 408, à l'étape 409, l'automate met en œuvre une temporisation dont la durée correspond à la valeur TmFrm, c'est-à-dire l'avance par rapport au premier paramètre temporel Tn_max, déduction faite d'un éventuel retard dans l'exécution de la séquence DrClsSeq. À la fin de cette temporisation, le temps écoulé depuis l'ouverture des portes, à la fin de la séquence 402, correspond au premier paramètre temporel Tn_max, auquel s'ajoute la durée nominale de la séquence DrClsSeq. On retrouve la période d'embarquement/débarquement correspondant au premier paramètre temporel Tn_max, et la séquence de fermeture DrClsSeq de l'étape407. L'automate passe alors à l'étape 410.

Si le test de l'étape 412 est négatif, alors, à l'étape suivante 414, on temporise pendant une durée dt avant de retourner au test de l'étape 406. Autrement dit, si la condition d'occupation de l'étape 411 est vérifiée, mais que le temps écoulé depuis la fin de la séquence d'ouverture de l'étape 402 reste inférieur au second paramètre temporel Tn_min, alors l'automate temporise, en particulier avant de vérifier à nouveau cette condition d'occupation. La durée dt de temporisation de l'étape 414 correspond à un incrément temporel. Cette durée dt peut être très faible, voire négligeable, en comparaison des valeurs du premier paramètre temporel Tn_max et du second paramètre temporel Tn_min. Ceci permet de faire fonctionner la séquence de la figure 4 pratiquement en temps réel.

Dans le cas où le test de l'étape 411 est négatif, c'est-à-dire si la condition d'occupation du véhicule n'est pas remplie, alors l'automate retourne à la temporisation de l'étape 414.

On reconnaît dans la succession du test de l'étape 412 et de la séquence de l'étape 414 une temporisation correspondant au second paramètre temporel Tn_min. Avant l'expiration de cette temporisation, l'automate ne commande pas la séquence de fermeture des portes de l'étape 407. Tout fonctionne de manière que l'automate réagisse à l'évaluation de la condition VhclOccCnd après expiration d'une période minimale d'accès au véhicule, débutée à la fin de l'étape 402, et dont la durée correspond au second paramètre temporel Tn_min.

Le second paramètre temporel Tn_min correspond à un temps minimal pendant lequel l'accès au véhicule est autorisé pour l'embaquement/débarquement. Le premier paramètre temporel Tn_max correspond à un temps maximal pendant lequel l'accès au véhicule est autorisé pour l'embaquement/débarquement.

Avant l'expiration d'une temporisation correspondant au premier paramètre temporel Tn_max, la fermeture des portes de l'étape 407 est commandée dès que la condition VhclOccCnd portant sur l'occupation du véhicule est vérifiée, à condition que soit expirée la temporisation correspondant au second paramètre temporel Tn_min.

Les valeurs du premier paramètre temporel Tn_max et du second paramètre temporel Tn_min, ainsi que du paramètre supplémentaire Tcls_nom, sont déterminées comme des durées nominales d'exploitation. Une valeur du premier paramètre temporel Tn_max est typiquement de l'ordre de quelques dizaines de secondes, par exemple comprise entre 12 et 40 secondes. Une valeur du second paramètre temporel Tn_min est typiquement de l'ordre d'une dizaine de secondes, par exemple comprise entre 5 et 15 secondes. Une valeur du paramètre temporel supplémentaire Tcls_nom est typiquement de l'ordre de quelques secondes, par exemple comprise entre 1 et 3 secondes.

L'avance TmFrm, par rapport à la durée nominale d'ouverture des portes Tn_max, avec laquelle la séquence de fermeture de l'étape 407 est commandée, est mise à profit ici dans l'étape 409 de temporisation. Autrement dit, la condition de départ véhicule StrtVhclCnd de l'étape 410 n'est vérifiée qu'après l'expiration d'une temporisation dont la durée correspond au premier paramètre temporel Tn_max, auquel s'ajoute la durée de la séquence DrClsSeq, que la séquence de fermeture des portes de l'étape 407 ait ou non été commandée de manière anticipée, i.e. avant l'expiration d'une période correspondant au premier paramètre temporel Tn_max.

On respecte la période d'embarquement/débarquement, laquelle peut être vue comme une durée maximale d'exploitation. On conserve ainsi un cadencement nominal des véhicules le long des voies de transport. Le temps gagné par rapport à cette durée maximale d'exploitation, c'est-à-dire l'avance TmFrm, peut être mis à profit pour gérer des aléas d'exploitation. Un aléa d'exploitation typique concerne une impossibilité de fermer les portes du fait d'un blocage de celles-ci par un passager. Ce type d'aléa, comme d'autres, survient surtout en cas de fortes affluences. En cas d'affluence, la fermeture des portes se trouve anticipée.

Le cadencement nominal est d'autant plus sûrement respecté que l'étape de temporisation 409 offre une marge temporelle d'exploitation, qui permet d'absorber des retards liés à ces aléas d'exploitation sans conséquence sur le cadencement des véhicules de l'installation.

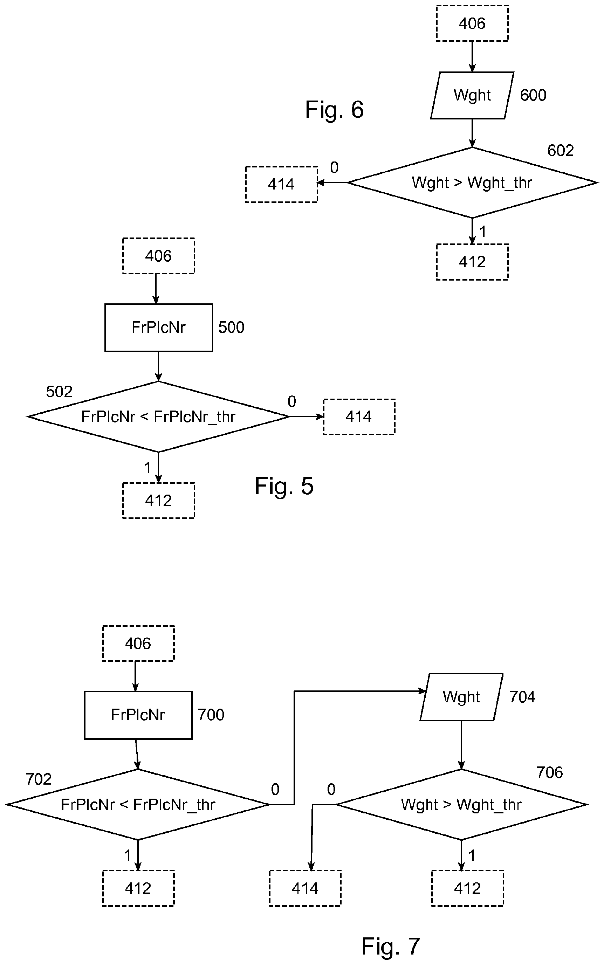

On fait référence à la figure 5.

Elle montre une première mise en œuvre de l'étape 411 de la figure 4 portant sur la vérification d'une condition d'occupation du véhicule.

À l'étape 500, qui suit l'étape 406, l'automate détermine une valeur représentative d'un nombre de places disponibles dans la cabine du véhicule, ou valeur FrPlcNr. En remplacement, il pourrait s'agir d'un taux.

Dans l'étape suivante 502, l'automate compare la valeur FrPlcNr à une valeur seuil FrPlcNr_thr. Si la valeur FrPlcNr est inférieure à la valeur seuil FrPlcNr_thr, alors on passe à l'étape suivante 412. L'automate va pouvoir commander la séquence de fermeture des portes de l'étape 407 puis enregistrer l'avance temporelle TmFrm sur la valeur nominale Tn_max à l'étape 408. Sinon, l'automate temporise pour une période temporelle dt, à l'étape 414.

L'automate commande ici la séquence de fermeture des portes dès que le nombre de places disponibles dans la cabine se trouve en dessous d'une valeur seuil FrPlcNr_thr de places disponibles, à condition que l'accès au véhicule ait été autorisé au-delà d'une durée minimale d'exploitation définie par la valeur du second paramètre temporel Tn_min (condition de l'étape 412). Cela revient à anticiper la fermeture des portes par rapport à la période d'embarquement/débarquement, ou durée maximale d'exploitation, correspondant à la valeur du premier paramètre temporel Tn_max.

On fait référence à la figure 6.

Elle montre une seconde mise en œuvre de l'étape 411 de la figure 4 portant sur la vérification d'une condition d'occupation du véhicule.

À l'étape 600, qui suit l'étape 406, l'automate obtient une valeur de mesure, représentative d'un poids courant de la cabine du véhicule, ou du véhicule lui-même. Cette valeur peut être obtenue d'un module analogue au module de charge 306 sur la figure 3.

Dans l'étape suivante 602, l'automate compare cette valeur de poids mesuré à une valeur de poids seuil Wght_thr. Si le poids de la cabine est supérieur à la valeur seuil Wght_thr, alors on passe à l'étape suivante 412. L'automate va pouvoir commander la séquence de fermeture des portes de l'étape 407 puis enregistrer l'avance TmFrm à l'étape 408. Sinon, l'automate temporise d'une période temporelle dt, à l'étape 414.

L'automate commande ici la fermeture des portes dès que l'on mesure un poids de la cabine Wght supérieur à une valeur de poids seuil Wght_thr, à condition que l'accès à la cabine ait été autorisé au-delà de la durée minimale d'exploitation définie par la valeur du second paramètre temporel Tn_min (condition de l'étape 412). Cette valeur seuil Wght_thr du poids est déterminée comme un seuil d'exploitation, plutôt que comme un seuil de sécurité. Autrement dit, cette valeur seuil Wght_thr est déterminée de manière à prendre en compte la régularité du cadencement des véhicules de l'installation et le confort des passagers, plutôt que comme une valeur limite de type sécuritaire, liée par exemple à un poids maximum autorisé pour un véhicule. Cette valeur seuil Wght_thr peut être mise en relation avec un nombre de passagers, par exemple en considérant un poids moyen par passager.

On fait référence à la figure 7.

Elle montre une troisième mise en œuvre de l'étape 411 de la figure 4.

Les étapes 700 et 702 sont analogues aux étapes 500 et 502 de la figure 5, à l'exception que, lorsque la valeur du nombre de places libres FrPlcNr est supérieure à la valeur seuil FrPlcNr_thr, l'automate met en œuvre des étapes 704 et 706 analogues respectivement aux étapes 600 et 602 de la figure 6.

Dans cette réalisation, l'automate commande la séquence de fermeture des portes de l'étape 407 dès que le nombre de places disponibles dans la cabine est inférieur à la valeur seuil FrPlcNr_thr ou que le poids de cette cabine dépasse la valeur seuil Wght_thr, à condition, à chaque fois, que la durée d'ouverture de ces portes ait dépassée une durée minimale Tn_min (condition de l'étape 412).

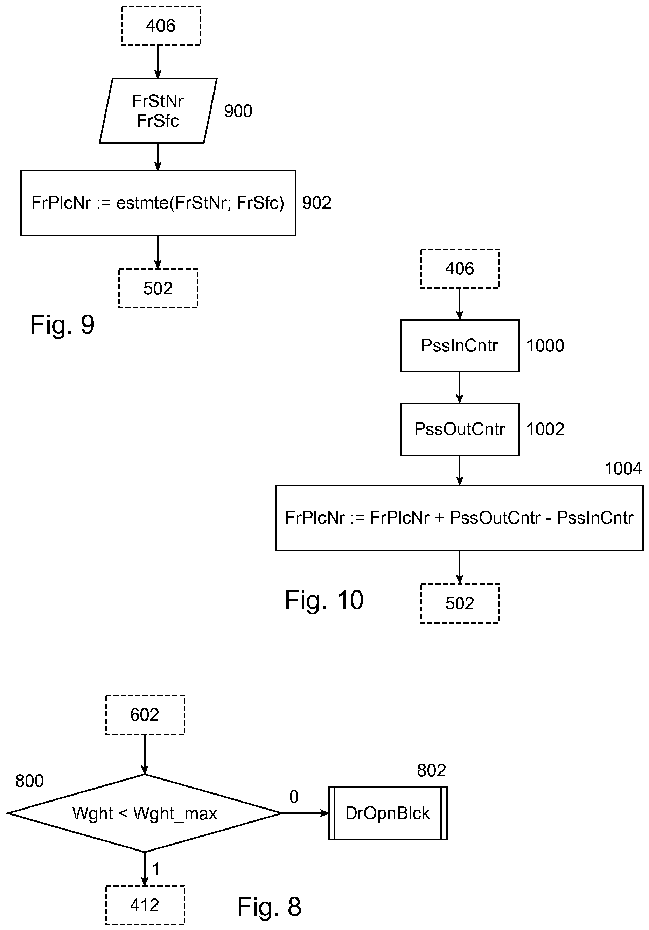

On fait référence à la figure 8.

Elle montre un développement du mode de réalisation de la figure 6. À l'issue du test de l'étape 602, dans le cas où le poids de la cabine est supérieur à la valeur seuil Wght_thr, l'automate compare la valeur du poids du véhicule à une valeur de poids maximal, ou valeur Wght_max, au cours d'une étape 800. Si le poids mesuré est inférieur au poids maximal Wght_max, alors l'automate commande la séquence de fermeture des portes de l'étape 407 et enregistre une valeur d'avance TmFrm à l'étape 408, dans le cas où la condition de l'étape 412 est vérifiée.

Sinon, l'automate commande une séquence de blocage des portes en position ouverte à l'étape 802. Cette séquence peut comprendre en particulier une commande d'émission d'un signal de sécurité ou d'une invitation des derniers voyageurs embarqués à débarquer.

Dans ce développement, une fois le poids de la cabine ou du véhicule redescendu en dessous du poids maximal Wght_max, les portes peuvent de nouveau être fermées, et le véhicule autorisé à quitter sa position d'arrêt (étape 410) à l'expiration de la temporisation liée au respect du cadencement des véhicules (étape 409).

On ne déclenche pas la séquence de fermeture des portes tant que la grandeur représentative de l'occupation du véhicule, ici le poids de la cabine, est supérieure à une valeur limite, supérieure à la valeur seuil.

La valeur du poids maximal Wght_max est une valeur limite de sécurité, définie en elle-même en fonction de la capacité du véhicule, plutôt que d'exploitation. Elle est par exemple fixée par les normes. Cette valeur peut être déduite d'un nombre de places assises et d'une surface au sol de la cabine, en considérant une surface minimale autorisée par passager et un poids moyen de passager.

Cela permet de dimensionner l'installation de façon optimisée à partir de la valeur du poids maximal Wght_max, puisque le test de l'étape 800 garantit que le poids des véhicules sur la ligne ne dépasse pas cette valeur maximale.

De préférence, la valeur de poids seuil Wght_thr et la valeur de poids maximal Wght_max, relatives au véhicule ou à sa cabine, sont déterminées en relation l'une de l'autre afin d'éviter que soit commandée la séquence de blocage des portes de l'étape 802, du moins dans des conditions normales d'exploitation. Il s'agit de ne pas pénaliser le cadencement des véhicules, et, finalement, l'efficacité de l'exploitation de l'installation et la disponibilité de cette dernière.

Les valeurs des premier et second paramètres temporels Tn_min et Tn_max, relatifs aux durées minimale et maximale d'ouverture des portes, du paramètre FrPlcNr_thr relatif au seuil de places disponibles dans le véhicule, ainsi que les seuils d'exploitation et de sécurité du poids du véhicule représentés par les valeurs de poids seuil Wght_thr et poids maximal Wght_max sont déterminées en relation les unes des autres afin que le fonctionnement de l'installation soit fluide, efficace, robuste et sûr. En particulier, les valeurs des paramètres FrPlcNr_thr et de poids seuil Wght_thr correspondent à des valeurs seuils d'occupation du véhicule. Elles sont déterminées de manière à permettre à quelques passagers supplémentaires d'embarquer pendant la séquence de fermeture des portes, typiquement pendant l'émission d'un signal sonore qui précède la fermeture de ces portes, sans que la capacité nominale du véhicule, relative aux places disponibles dans celui-ci, ni la valeur Wght_max maximale du poids ne soient dépassées.

On fait référence à la figure 9.

Elle détaille une première réalisation de l'étape 500 de la figure 5, dans laquelle l'automate détermine un nombre de places disponibles dans le véhicule.

En une étape 900, l'automate reçoit une valeur représentative d'un nombre de sièges inoccupés dans la cabine, ou valeur FrStNr, et une valeur représentative d'une surface au sol libre dans cette cabine, ou valeur FrSfc. Ces valeurs peuvent provenir de l'automate véhicule, par exemple des modules FrStDet 204 et FrSpcDet 206 respectivement.

À l'étape suivante 902, l'automate détermine la valeur FrPlcNr comme résultat de l'appel d'une fonction d'estimation avec ces valeurs.

Les valeurs de l'étape 900 sont reçues à chaque fois qu'est évaluée la condition d'occupation VhclOccCnd à l'étape 411, régulièrement, à l'issue de chaque temporisation de durée dt (étape 414). Ces valeurs peuvent être mesurées régulièrement, avec un intervalle temporel cohérent avec la temporisation de l'étape 414. En pratique, ces valeurs sont ainsi obtenues en temps réel, au moins sur une période temporelle correspondant à un état ouvert des portes, entre la fin de l'étape 402 et le début de l'étape 407.

On fait référence à la figure 10.

Elle détaille une seconde réalisation de l'étape 500 de la figure 5, dans laquelle l'automate détermine un nombre de places disponibles dans le véhicule.

L'automate a préalablement reçu une valeur FrPlcNr relatif au nombre de places disponibles avant la séquence d'ouverture des portes de l'étape 402. Cette valeur est par exemple calculée par l'automate véhicule à l'aide des modules FrStDet 204 et FrSpcDet 206.

À l'étape 1000, qui suit l'étape 406, l'automate interroge un premier compteur, relatif au nombre de passagers embarqués depuis l'ouverture des portes.

À l'étape suivante 1002, l'automate interroge un second compteur, relatif au nombre de passagers débarqués depuis l'ouverture des portes.

À l'étape suivante 1004, l'automate détermine la valeur FrPlcNr comme la différence entre la somme de la valeur FrPlcNr initiale et du nombre de passagers débarqués, et le nombre de passagers embarqués.

Contrairement aux modes de réalisations précédents, en particulier celui-illustré à la figure 9, où la valeur FrPlcNr est mesurée pratiquement en temps réel sur la durée d'ouverture des portes, cette valeur FrPlcNr provient ici d'une mesure, ou d'une estimation, unique.

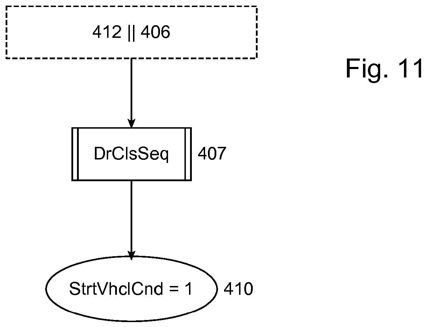

On fait référence à la figure 11.

Elle montre une variante du fonctionnement de l'automate de station illustré en figure 4. Selon cette variante, la condition de départ de l'étape 410 est vérifiée, au moins en ce qui concerne l'automate station qui pilote le poste à quai, dès la fin de la séquence d'interdiction d'accès de l'étape 407, que cette séquence ait été déclenchée en avance par rapport au premier paramètre temporel Tn_max (à la suite de l'étape 412) ou non (à la suite de l'étape 406). Cette variante est plus particulièrement adaptée dans le cas d'une installation où le respect du cadencement des véhicules est géré autrement que par l'automate station, ou la partie de cette automate qui pilote le poste à quai. Cette variante de fonctionnement conserve les avantages tirés d'un déclenchement anticipé de l'interdiction d'accès au véhicule, en particulier la mise à disposition d'une fenêtre temporelle permettant d'absorber une partie au moins d'un retard lié à un aléa d'exploitation.

L'invention n'est pas limitée aux modes de réalisation décrits plus haut, à titre d'exemple uniquement. L'invention englobe toutes les variantes que pourra envisager l'homme de l'art. En particulier :
- On a décrit des postes à quai correspondant chacun à un tronçon de voie où les véhicules marquent l'arrêt afin d'embarquer et/ou débarquer des passagers, par exemple la première position d'arrêt 112 de la figure 1. Ce qui compte, c'est qu'un poste à quai soit organisé à chaque fois en regard d'un tronçon de voie où des véhicules sont susceptibles d'embarquer ou de débarquer des passagers, que cet embarquement/débarquement se fasse dans un véhicule à l'arrêt ou circulant à vitesse réduite sur le tronçon en question.
- On a décrit des agencements à porte palière en tant que dispositifs susceptibles d'être actionnés pour sélectivement autoriser et interdire l'accès aux véhicules depuis un poste à quai. Plus généralement, tout dispositif capable de réaliser cette fonction peut être utilisé. En particulier, le type de dispositif utilisé peut varier selon que l'embarquement ou le débarquement se font sur un tronçon de quai étendu, par exemple dans le cas où les véhicules circulent à vitesse réduite, ou restreint, dans le cas par exemple où les véhicules s'arrêtent.
- On a décrit des postes à quai comprenant chacun un agencement à porte palière. Un poste à quai peut comprendre plusieurs agencements à porte palière. Plusieurs postes à quai pourraient également partager un même agencement à porte palière.
- Certains au moins des modules décrits en relation avec un automate station peuvent, au moins partiellement, être intégrés en remplacement dans un automate véhicule selon les réalisations envisagées. C'est le cas en particulier du module de pesée, qui, notamment lorsque la pesée concerne la cabine et/ou lorsqu'un peson est intercalé entre la suspente du véhicule et sa cabine, peut être intégré à l'automatisme véhicule 200 plutôt qu'à l'automatisme station 300. Pour des raisons de précision, il est préférable de mesurer le poids de la cabine plutôt que celui de l'ensemble du véhicule. Toutefois rien n'exclut de travailler sur le poids du véhicule dans son ensemble.
- Les modules en charge de la détection de sièges inoccupés, par exemple le module FrStDet 204 de la figure 1, et de la détection de surface libre, par exemple le module FrSpcDet 206 de la figure 1, peuvent être regroupés en un même module, par exemple capable de déterminer un nombre de places libres dans une cabine.
- Les modules décrits en relation avec les figures 2 et 3 peuvent être remplacés, en partie au moins, par des fonctions de communication permettant d'obtenir les informations pertinentes de dispositifs extérieurs aux véhicules et/ou à la station.
- Plus généralement, la séquence décrite en relation avec la figure 4 n'est pas limitée au cas de véhicules qui s'arrêtent aux fins d'embarquement/débarquement. La condition initiale StpVhclCnd peut être vérifiée dès lors qu'un véhicule se trouve dans un tronçon de voie correspondant à un poste à quai. Cette condition peut être complétée par le fait que le véhicule y respecte une limite de vitesse par rapport au quai.
- On a décrit des postes à quai à usage pour l'embarquement et le débarquement de passagers. Certains au moins des postes à quai peuvent être dédiés soit à l'embarquement soit au débarquement, de manière exclusive. L'automate station peut alors être agencé de manière à vérifier une temporisation minimale d'ouverture de porte Tn_min sur les postes à quai dédiés au débarquement de passagers. Pour les postes à quai dédiés à l'embarquement, l'automate station pourra au contraire omettre la vérification de cette temporisation minimale Tn_min.
- L'ouverture des portes véhicule ou celle des portes palières peut se faire sans intervention de l'automatisme véhicule ou de l'automatisme station, par exemple par un déclenchement purement mécanique. On peut cependant conserver une commande par automate de la fermeture de l'une ou l'autre des portes palières et des portes véhicules.
- On a décrit des embarquements et des débarquements de passagers en un poste à quai qui sont conditionnés à la fois par un dispositif attaché au poste, typiquement un agencement à porte palière, et un dispositif attaché au véhicule, typiquement les portes de celui-ci. L'invention peut être envisagée sans dispositif attaché au poste à quai, l'automate station commandant alors les portes véhicules, au moins en ce qui concerne leur fermeture. De même, l'automate station peut ne pas commander les portes véhicule dans le cas où il commande déjà un dispositif d'accès attaché au poste à quai. En outre, le dispositif attaché au poste à quai n'interdit pas nécessairement l'accès au véhicule de manière physique. On peut utiliser, en remplacement ou en complément, un ou plusieurs dispositifs de signalisation, tels que des feux colorés par exemple.
- On a décrit un second paramètre temporel Tn_min établi de manière fixe. En remplacement, la valeur de ce paramètre pourrait varier selon le véhicule considéré, en fonction par exemple de la charge de celui-ci.
- On a décrit un automate station en charge de la vérification d'un critère de poids maximal. S'agissant d'une fonction touchant à la sécurité de l'installation de transport, cette vérification peut être réalisée par un automate distinct.
- La valeur de poids seuil Wght_thr peut être déterminée en fonction d'une capacité maximale que le véhicule ne doit pas dépasser, pour des raisons de sécurité, par exemple la valeur maximale de poids Wght_max, même si l'automate ne vérifie pas que cette capacité maximale n'est pas dépassée. Dans ce cas, la valeur du poids seuil Wght_thr peut être assortie d'un coefficient de sécurité.
- On a décrit l'invention dans le cas particulier d'une installation de type télécabine. L'invention s'applique à tout type d'installation de transport de personnes par câble, en particulier :
   - de type téléporté aérien, en particulier de type monocâble (un câble porteur-tracteur), double monocâble (deux câbles porteurs-tracteurs) ou bicâble (un ou plusieurs câbles tracteurs et un ou plusieurs câbles porteurs) ;
   - de type funiculaire ;
   - de type débrayable, c'est-à-dire comportant un ou plusieurs câbles de traction entrainés à vitesse uniforme et des véhicules tractés par ces câbles qui peuvent débrayer pour s'arrêter en station et/ou y réduire leur vitesse aux fins d'embarquement/débarquement ;
   - de type pulsé, c'est-à-dire dont les véhicules sont constamment solidaires du ou des câbles de traction, la vitesse de ces câbles étant variable pour permettre l'arrêt des véhicules en station ;
   - de type va-et-vient.
- L'invention peut également être vue comme un procédé de commande d'une installation de transport par câble.

## Revendications

1. Dispositif de commande d'une installation de transport par câble, comprenant au moins un contrôleur capable d'organiser une période d'embarquement (Tn_max) d'une durée nominale pour des véhicules (108, 110) en station (100), cette période d'embarquement (Tn_max) se finissant par une interdiction d'accès au véhicule (407),
le contrôleur comprenant une entrée pour recevoir au moins une grandeur (FrPlcNr, Wght) représentative d'une occupation véhicule, **caractérisé en ce que** le contrôleur est agencé pour réagir à la réception d'une telle grandeur (FrPlcNr, Wght) pendant la période d'embarquement (Tn_max) en la comparant à une valeur seuil (FrPlcNr_thr, Wght_thr) et en déclenchant l'interdiction d'accès au véhicule (407) de manière anticipée, avant la fin de la période d'embarquement (Tn_max), en fonction du résultat de la comparaison entre ladite grandeur (FrPlcNr, Wght) et la valeur seuil (FrPlcNr_thr, Wght_thr).

2. Dispositif selon la revendication 1, dans lequel le contrôleur est agencé pour réagir à la réception de ladite grandeur (FrPlcNr, Wght) après expiration d'une période minimale (Tn_min) d'accès au véhicule (108, 110).

3. Dispositif selon l'une des revendications 1 et 2, dans lequel ladite grandeur (FrPlcNr, Wght) est reçue en temps en réel.

4. Dispositif selon l'une des revendications précédentes, dans lequel ladite grandeur (FrPlcNr, Wght) résulte en partie au moins d'une mesure (FrStNr, FrSfc, Wght) réalisée sur le véhicule (108, 110).

5. Dispositif selon l'une des revendications précédentes, dans lequel la grandeur (FrPlcNr, Wght) représentative de l'occupation véhicule comprend une grandeur représentative (FrPlcNr) d'un nombre de places libres ou occupées dans le véhicule (108, 110).

6. Dispositif selon la revendication 5, dans lequel la grandeur représentative (FrPlcNr) du nombre de places libres ou occupées dans le véhicule résulte de l'une au moins d'une mesure de surface libre ou occupée (FrSfc), respectivement, dans le véhicule (108, 110) et d'une détection de sièges libres ou occupés (FrStNr), respectivement, dans ce véhicule (108, 110).

7. Dispositif selon la revendication 6, dans lequel la mesure de surface libre ou occupée (FrSfc) résulte d'un ou plusieurs dispositifs du groupe formé d'un agencement de réflecteurs optiques répartis sur le sol du véhicule et de détecteurs optiques répartis au plafond de ce véhicule, d'un dispositif de prise de vues associé à un circuit de traitement d'images, d'un tapis de sol à contacteurs répartis, d'un tapis de type capacitif et similaires.

8. Dispositif selon l'une des revendications 6 et 7, dans lequel la détection de sièges libres ou occupés (FrStNr) dans le véhicule (108, 110) résulte d'un ou plusieurs dispositifs du groupe formé de dispositifs de pesée installés dans les sièges, de contacts secs disposés dans les sièges, d'un détecteur optique, d'un dispositif de prise de vues associé à un circuit de traitement d'images et similaires.

9. Dispositif selon l'une des revendications précédentes, dans lequel la grandeur (FrPlcNr, Wght) représentative de l'occupation véhicule comprend une grandeur représentative (Wght) d'un poids du véhicule.

10. Dispositif selon l'une des revendications précédentes, dans lequel la valeur seuil (FrPlcNr_thr, Wght_thr) correspond à une valeur seuil d'occupation véhicule.

11. Dispositif selon l'une des revendications précédentes, dans lequel la valeur seuil (FrPlcNr_thr, Wght_thr) est déterminée en partie au moins en fonction d'une valeur limite de sécurité (Wght_max).

12. Dispositif selon l'une des revendications précédentes, dans lequel la période d'embarquement (Tn_max) se fait selon une première temporisation et, lorsque le contrôleur déclenche une interdiction d'accès (407) en avance (TmFrm) sur la première temporisation, l'automate organise un délai de temporisation d'une durée déterminée à l'issue de cette interdiction d'accès (408), la durée du délai de temporisation étant déterminée en fonction de cette avance (TmFrm).

13. Dispositif selon la revendication 12, dans lequel la durée du délai de temporisation correspond à ladite avance (TmFrm) de laquelle est déduite, le cas échéant, un retard dans l'interdiction d'accès (407).

14. Dispositif selon l'une quelconque des revendications 12 et 13, **caractérisé en ce qu'**à l'issue du délai de temporisation, l'automate vérifie qu'une condition de départ (StrtVhclCnd) est remplie, et, de préférence, génère un ordre de départ.

15. Dispositif selon l'une des revendications précédentes, dans lequel la grandeur (Wght) représentative de l'occupation véhicule comprend une valeur d'occupation, et le contrôleur est agencé pour déclencher l'interdiction d'accès au véhicule (407) lorsque la valeur d'occupation est supérieure à la valeur seuil (Wght_thr).

16. Dispositif selon l'une des revendications précédentes, dans lequel la grandeur (FrPlcNr) représentative de l'occupation véhicule comprend une valeur d'inoccupation, et le contrôleur est agencé pour déclencher l'interdiction d'accès au véhicule (407) lorsque la valeur d'inoccupation est inférieure à la valeur seuil (FrPlcNr_thr).

17. Dispositif selon l'une des revendications précédentes, dans lequel le contrôleur est agencé pour ne pas déclencher l'interdiction d'accès au véhicule (408) tant que la grandeur (FrPlcNr, Wght) représentative de l'occupation du véhicule est supérieure à une valeur limite d'occupation véhicule (Wght_max), supérieure à ladite valeur seuil (FrPlcNr_thr, Wght_thr).

18. Installation de transport par câble du type comprenant des véhicules (108, 110) et au moins une station (100), l'installation comprenant en outre un dispositif de commande selon l'une des revendications précédentes.

19. Procédé de commande d'une installation de transport par câble, dans lequel on organise une période d'embarquement (Tn_max) d'une durée nominale pour des véhicules (108, 110) en station (100), cette période d'embarquement (Tn_max) finissant avec une interdiction d'accès au véhicule, le procédé comprenant l'étape suivante :
- recevoir au moins une grandeur (FrPlcNr, Wght) représentative d'une occupation véhicule,
**caractérisé en ce que** le procédé comprend en outre l'étape suivante :
- réagir à la réception d'une telle grandeur pendant la période d'embarquement (Tn_max) en la comparant à une valeur seuil (FrPlcNr_thr, Wght_thr) et en déclenchant (407) l'interdiction d'accès au véhicule de manière anticipée, avant la fin de la période d'embarquement (Tn_max), en fonction du résultat de la comparaison entre ladite grandeur (FrPlcNr, Wght) et la valeur seuil (FrPlcNr_thr, Wght_thr).

## Patentansprüche

1. Vorrichtung zur Steuerung einer Seilförderanlage, umfassend mindestens eine Kontrolleinrichtung, die fähig ist, einen Verladungszeitraum (Tn_max) mit einer Nenndauer für Fahrzeuge (108, 110) in einer Station (100) zu organisieren, wobei dieser Verladungszeitraum (Tn_max) durch ein Fahrzeugzugangsverbot (407) beendet wird,
wobei die Kontrolleinrichtung einen Eingang umfasst, um mindestens eine Größe (FrPlcNr, Wght) zu empfangen, die bezeichnend ist für eine Fahrzeugbelegung, **dadurch gekennzeichnet, dass** die Kontrolleinrichtung angeordnet ist, um auf den Empfang einer solchen Größe (FrPlcNr, Wght) während des Verladungszeitraums (Tn_max) zu reagieren, indem sie mit einem Schwellenwert (FrPlcNr_thr, Wght_thr) verglichen wird und indem das Fahrzeugzugangsverbot (407) antizipiert, vor dem Ende des Verladungszeitraums (Tn_max), ausgelöst wird, in Abhängigkeit von dem Ergebnis des Vergleichs zwischen der Größe (FrPlcNr, Wght) und dem Schwellenwert (FrPlcNr_thr, Wght_thr).

2. Vorrichtung nach Anspruch 1, wobei die Kontrolleinrichtung angeordnet ist, um auf den Empfang der Größe (FrPlcNr, Wght) zu reagieren, nachdem ein Mindestzeitraum (Tn_min) für den Zugang zum Fahrzeug (108, 110) abgelaufen ist.

3. Vorrichtung nach einem der Ansprüche 1 und 2, wobei die Größe (FrPlcNr, Wght) in Echtzeit empfangen wird.

4. Vorrichtung nach einem der vorstehenden Ansprüche, wobei die Größe (FrPlcNr, Wght) mindestens teilweise aus einer Messung (FrStNr, FrSfc, Wght) hervorgeht, die an dem Fahrzeug (108, 110) durchgeführt wird.

5. Vorrichtung nach einem der vorstehenden Ansprüche, wobei die Größe (FrPlcNr, Wght), die bezeichnend ist für die Fahrzeugbelegung, eine Größe umfasst, die bezeichnend (FrPlcNr) ist für eine Anzahl von freien oder belegten Plätzen in dem Fahrzeug (108, 110) .

6. Vorrichtung nach Anspruch 5, wobei die Größe, die bezeichnend (FrPlcNr) ist für die Anzahl von freien oder belegten Plätzen in dem Fahrzeug, aus mindestens einem hervorgeht von einer Messung einer jeweils freien oder belegten Oberfläche (FrSfc) in dem Fahrzeug (108, 110) und von einer Erkennung von jeweils freien oder belegten Sitzen (FrStNr) in disem Fahrzeug (108, 110).

7. Vorrichtung nach Anspruch 6, wobei die Messung der freien oder belegten Oberfläche (FrSfc) aus einer oder mehreren Vorrichtungen der Gruppe hervorgeht, die gebildet wird von einer Anordnung optischer Reflektoren, die auf dem Boden des Fahrzeugs verteilt sind, und optischer Detektoren, die an der Decke dieses Fahrzeugs verteilt sind, von einer Bildaufnahmevorrichtung, die mit einer Bildverarbeitungsschaltung verbunden ist, von einer Bodenmatte mit verteilten Kontaktgebern, von einer Matte kapazitiver Art und Ähnlichen.

8. Vorrichtung nach einem der Ansprüche 6 und 7, wobei die Erkennung von freien oder belegten Sitzen (FrStNr) in dem Fahrzeug (108, 110) aus einer oder mehreren Vorrichtungen der Gruppe hervorgeht, die gebildet wird von Wiegevorrichtungen, die in den Sitzen installiert sind, von potenzialfreien Kontakten, die in den Sitzen angeordnet sind, von einem optischen Detektor, von einer Bildaufnahmevorrichtung, die mit einer Bildverarbeitungsschaltung verbunden ist, und Ähnlichen.

9. Vorrichtung nach einem der vorstehenden Ansprüche, wobei die Größe (FrPlcNr, Wght), die bezeichnend ist für die Fahrzeugbelegung, eine Größe umfasst, die bezeichnend (Wght) ist für ein Gewicht des Fahrzeugs.

10. Vorrichtung nach einem der vorstehenden Ansprüche, wobei der Schwellenwert (FrPlcNr_thr, Wght_thr) einem Schwellenwert der Fahrzeugbelegung entspricht.

11. Vorrichtung nach einem der vorstehenden Ansprüche, wobei der Schwellenwert (FrPlcNr_thr, Wght_thr) mindestens teilweise in Abhängigkeit von einem Sicherheitsgrenzwert (Wght_max) bestimmt wird.

12. Vorrichtung nach einem der vorstehenden Ansprüche, wobei der Verladungszeitraum (Tn_max) gemäß einem ersten Timeout erfolgt und, wenn die Kontrolleinrichtung ein Zugangsverbot (407) vor (TmFrm) dem ersten Timeout auslöst, der Automat eine Timeout-Frist mit einer bestimmten Dauer nach diesem Zugangsverbot (408) organisiert, wobei die Dauer der Timeout-Frist in Abhängigkeit von diesem Vorsprung (TmFrm) bestimmt wird.

13. Vorrichtung nach Anspruch 12, wobei die Dauer der Timeout-Frist dem Vorsprung (TmFrm) entspricht, von dem gegebenenfalls eine Verzögerung im Zugangsverbot (407) abgezogen wird.

14. Vorrichtung nach einem der Ansprüche 12 und 13, **dadurch gekennzeichnet, dass** nach der Timeout-Frist der Automat prüft, ob eine Ausgangsbedingung (StrtVhclCnd) erfüllt ist und vorzugsweise einen Startbefehl erzeugt.

15. Vorrichtung nach einem der vorstehenden Ansprüche, wobei die Größe (Wght), die bezeichnend ist für die Fahrzeugbelegung, einen Belegungswert umfasst, und die Kontrolleinrichtung angeordnet ist, um das Fahrzeugzugangsverbot (407) auszulösen, wenn der Belegungswert größer ist als der Schwellenwert (Wght_thr).

16. Vorrichtung nach einem der vorstehenden Ansprüche, wobei die Größe (FrPlcNr), die bezeichnend ist für die Fahrzeugbelegung, einen Leerbestandswert umfasst, und die Kontrolleinrichtung angeordnet ist, um das Fahrzeugzugangsverbot (407) auszulösen, wenn der Leerbestandswert kleiner ist als der Schwellenwert (FrPlcNr_thr).

17. Vorrichtung nach einem der vorstehenden Ansprüche, wobei die Kontrolleinrichtung angeordnet ist, um das Fahrzeugzugangsverbot (408) nicht auszulösen, solange die Größe (FrPlcNr, Wght), die bezeichnend ist für die Fahrzeugbelegung, größer ist als ein Höchstwert der Fahrzeugbelegung (Wght_max), der größer ist als der Schwellenwert (FrPlcNr_thr, Wght_thr).

18. Seilförderanlage von der Art, die Fahrzeuge (108, 110) und mindestens eine Station (100) umfasst, wobei die Anlage ferner eine Vorrichtung zur Steuerung nach einem der vorstehenden Ansprüche umfasst.

19. Verfahren zur Steuerung einer Seilförderanlage, wobei ein Verladungszeitraum (Tn_max) mit einer Nenndauer für Fahrzeuge (108, 110) in einer Station (100) organisiert wird, wobei dieser Verladungszeitraum (Tn_max) mit einem Fahrzeugzugangsverbot endet, wobei das Verfahren den folgenden Schritt umfasst:
- Empfangen mindestens einer Größe (FrPlcNr, Wght), die bezeichnend ist für eine Fahrzeugbelegung,
**dadurch gekennzeichnet, dass** das Verfahren ferner den folgenden Schritt umfasst:
- Reagieren auf den Empfang einer solchen Größe während des Verladungszeitraums (Tn_max), indem sie mit einem Schwellenwert (FrPlcNr_thr, Wght_thr) verglichen wird und indem das Fahrzeugzugangsverbot antizipiert, vor dem Ende des Verladungszeitraums (Tn_max), ausgelöst (407) wird, in Abhängigkeit von dem Ergebnis des Vergleichs zwischen der Größe (FrPlcNr, Wght) und dem Schwellenwert (FrPlcNr_thr, Wght_thr).

## Claims

1. Device for controlling a cable transport facility, comprising at least one controller capable of organising an embarking period (Tn_max) of a nominal duration for vehicles (108, 110) at a station (100), this embarking period (Tn_max) ending with a prohibition of access to the vehicle (407),
the controller comprising an input for receiving at least one value (FrPlcNr, Wght) representative of a vehicle occupancy, **characterised in that** the controller is arranged to respond to the reception of such a value (FrPlcNr, Wght) during the embarking period (Tn_max) by comparing it to a threshold value (FrPlcNr_thr, Wght_thr) and by triggering the prohibition of access to the vehicle (407) in an anticipated manner, before the end of the embarking period (Tn_max), as a function of the result of the comparison between said value (FrPlcNr, Wght) and the threshold value (FrPlcNr_thr, Wght_thr).

2. Device according to claim 1, wherein the controller is arranged to respond to the reception of said value (FrPlcNr, Wght) after expiry of a minimum period (Tn_min) of access to the vehicle (108, 110).

3. Device according to one of claims 1 and 2, wherein said value (FrPlcNr, Wght) is received in real time.

4. Device according to one of the preceding claims, wherein said value (FrPlcNr, Wght) at least partially results from a measurement (FrStNr, FrSfc, Wght) performed on the vehicle (108, 110).

5. Device according to one of the preceding claims, wherein the value (FrPlcNr, Wght) representative of the vehicle occupancy comprises a value (FrPlcNr) representative of a number of free or occupied places in the vehicle (108, 110).

6. Device according to claim 5, wherein the value (FrPlcNr) representative of the number of free or occupied places in the vehicle results from one at least of one measurement of free or occupied surface (FrSfc), respectively, in the vehicle (108, 110) and of a detection of free or occupied seats (FrStNr), respectively, in this vehicle (108, 110).

7. Device according to claim 6, wherein the measurement of free or occupied surface (FrSfc) results from one or more devices of the group formed from an arrangement of optical reflectors distributed on the floor of the vehicle and optical detectors distributed on the ceiling of this vehicle, of a device for taking views associated with an image processing circuit, of a floor mat with distributed contactors, of a capacitive-type mat and similar.

8. Device according to one of claims 6 and 7, wherein the detection of free or occupied seats (FrStNr) in the vehicle (108, 110) results from one or more devices of the group formed of weighing devices installed in the seats, of dry contacts disposed in the seats, of an optical detector, of a device for taking views associated with an image processing circuit and similar.

9. Device according to one of the preceding claims, wherein the value (FrPlcNr, Wght) representative of the vehicle occupancy comprises a value (Wght) representative of a weight of the vehicle.

10. Device according to one of the preceding claims, wherein the threshold value (FrPlcNr_thr, Wght_thr) corresponds to a vehicle occupancy threshold value.

11. Device according to one of the preceding claims, wherein the threshold value (FrPlcNr_thr, Wght_thr) is at least partially determined at least as a function of a limit safety value (Wght_max).

12. Device according to one of the preceding claims, wherein the embarking period (Tn_max) takes place according to a first time out period and, when the controller triggers a prohibition of access (407) ahead (TmFrm) of on the first time out period, the automaton organises a time out delay of a determined duration at the end of this prohibition of access (408), the duration of the time out delay being determined as a function of this ahead value (TmFrm).

13. Device according to claim 12, wherein the duration of the time out delay corresponds to said ahead value (TmFrm) wherefrom is deduced, if applicable, a delay in the prohibition of access (407).

14. Device according to any one of claims 12 and 13, **characterised in that** at the end of the time out delay, the automaton checks that a start condition (StrtVhclCnd) is met, and preferably, generates a start order.

15. Device according to one of the preceding claims, wherein the value (Wght) representative of the vehicle occupancy comprises an occupancy value, and the controller is arranged to trigger the prohibition of access to the vehicle (407) when the occupancy value is greater than the threshold value (Wght_thr).

16. Device according to one of the preceding claims, wherein the value (FrPlcNr) representative of the vehicle occupancy comprises an inoccupancy value, and the controller is arranged to trigger the prohibition of access to the vehicle (407) when the inoccupancy value is smaller than the threshold value (FrPlcNr_thr).

17. Device according to one of the preceding claims, wherein the controller is arranged to not trigger the prohibition of access to the vehicle (408) as long as the value (FrPlcNr, Wght) representative of the occupancy of the vehicle is greater than a limit value of vehicle occupancy (Wght_max), greater than said threshold value (FrPlcNr_thr, Wght_thr).

18. Cable transport facility of the type comprising vehicles (108, 110) and at least one station (100), the facility further comprising a controller device according to one of the preceding claims.

19. Method for controlling a cable transport facility, wherein an embarking period (Tn_max) of a nominal duration is organised for vehicles (108, 110) at the station (100), this embarking period (Tn_max) ending with a prohibition of access to the vehicle, the method comprising the following step:
- receiving at least one value (FrPlcNr, Wght) representative of a vehicle occupancy,
**characterised in that** the method further comprises the following step:
- responding to the reception of such a value during the embarking period (Tn_max) by comparing it with a threshold value (FrPlcNr_thr, Wght_thr) and by triggering (407) the prohibition of access to the vehicle in an anticipated manner, before the end of the embarking period (Tn_max), as a function of the result of the comparison between said value (FrPlcNr, Wght) and the threshold value (FrPlcNr_thr, Wght_thr).
